(19)

**Europäisches Patentamt**

**European Patent Office**

**Office européen des brevets**

(11)  **EP 4 016 670 A1**

(12)  # EUROPEAN PATENT APPLICATION

(43) Date of publication:
**22.06.2022  Bulletin 2022/25**

(21) Application number: **20214849.0**

(22) Date of filing: **17.12.2020**

(51) International Patent Classification (IPC):
**H01M 4/131** (2010.01)    **H01M 4/62** (2006.01)
**H01M 4/1391** (2010.01)    **H01G 11/44** (2013.01)
**H01G 11/38** (2013.01)    **H01M 4/505** (2010.01)
**H01M 4/525** (2010.01)    **H01M 10/0525** (2010.01)

(52) Cooperative Patent Classification (CPC):
**H01M 4/625; H01G 11/38; H01G 11/44;**
**H01M 4/131; H01M 4/1391;** C01P 2002/74;
C01P 2006/11; C01P 2006/14; C01P 2006/17;
H01M 4/505; H01M 4/525; H01M 10/0525

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Heraeus Battery Technology GmbH**
**63450 Hanau (DE)**

(72) Inventors:
• **KRÜNER, Benjamin**
  **63801 Kleinostheim (DE)**

• **SCHNEIDERMANN, Christina**
  **63801 Kleinostheim (DE)**
• **REIN, Alexander**
  **63801 Kleinostheim (DE)**
• **MICHAUD-BERNLOCHNER, Julie**
  **60327 Frankfurt am Main (DE)**

(74) Representative: **Heraeus IP**
**Heraeus Business Solutions GmbH**
**Intellectual Property**
**Heraeusstraße 12-14**
**63450 Hanau (DE)**

(54)  ## NON-GRAPHITIC CARBON POWDERS FOR ELECTROCHEMICAL APPLICATIONS

(57)    The invention relates to cathode material for a lithium ion battery comprising an active material, a binder and at least one conductive carbon additive comprising a non-graphitic carbon material, wherein the non-graphitic carbon material is obtainable by pyrolyzing and carbonizing a precursor material comprising a component A selected from the group consisting of resol type resins, novolac type resins, cellulose, tannic acid, lignin and polyaniline.

EP 4 016 670 A1

**Description**

**FIELD OF THE INVENTION**

The invention relates to a cathode material for a lithium ion battery. The invention also relates to a process for producing the cathode material and the use of a non-graphitic carbon material for the cathode material of a lithium ion battery.

**BACKGROUND OF THE INVENTION**

As a part of an economy which is relying more and more on electrical power electrical energy storage becomes more and more important. Most applications like an accelerating electric vehicle or an electrical power tool require a high specific energy combined with a high specific power. Lithium ion batteries have proven to be useful for applications where fast charging and discharging, high specific energy and high specific power are required.

Lithium ion batteries without any conductive additive can only operate at very low charge and discharge rates because typical active materials for lithium ion cathodes have naturally a very low electrical conductivity. Thus, the specific power is limited. To overcome this hurdle it is required to build electrical networks in the electrode materials to improve the electrical percolation of the cathode. To achieve this, state-of-the-art lithium ion batteries use a conductive additive for the cathode material. These conductive additives need to exhibit a high conductivity, a good processability, and need to be chemically inert in the battery environment. Conductive carbon additives like for example carbon black meet these requirements. Other examples for conductive additives could be conductive metallic additives. The advantage of the carbon materials compared to metallic additives, is that they are chemically inert in the required potential window in the battery and in the electrolyte. This is necessary to obtain a long lifetime of a battery. Most common conductive additives on the market are currently carbon blacks. However, carbon black has several disadvantages as an additive due to its tendency to agglomerate and its rheological properties in a slurry.

Since the demand for high performance lithium ion batteries is constantly increasing it can be expected that also the demand for high quality additives will increase. For meeting the increasing demand for additives for lithium ion batteries, in particular for use in lithium ion battery cathodes new ways for preparing chemically pure conductive additives are strongly needed. In particular the carbon additive shall have a very low content of metallic impurities.

Furthermore, there is a strong need for carbon additives which are easy to produce.

Industrially produced standard carbon black production uses starting materials from crude oil or natural gas. Both starting materials have significant drawbacks. Crude oil products typically contain metallic contaminants. The handling of gaseous materials is complicated and subject to high safety regulations.

An object of the invention is to solve at least one of the above problems.

In particular it is an object of the invention to provide conductive additives for cathode materials of lithium ion batteries which are cheap and easy to produce and have a high purity.

**SUMMARY OF THE INVENTION**

At least one of the above objectives is met by the subject matter of the independent claims. Preferred embodiments to meet the objectives are specified in one or more dependent claims.

Embodiment 1 Cathode material for a lithium ion battery comprising

    a) an active material,
    b) a binder and
    c) at least one conductive carbon additive comprising a non-graphitic carbon material,
    wherein the non-graphitic carbon material is obtainable by pyrolyzing and carbonizing a precursor material comprising a component A selected from the group consisting of resol type resins, novolac type resins, cellulose, tannic acid, lignin and polyaniline.

Embodiment 2 Cathode material according to the foregoing embodiment, wherein the non-graphitic carbon material has at least two of the following properties:

    i. a modal pore size in the range from 1000 - 1500 nm,
    ii. an average particle diameter $d_{50}$ in the range from 2 to 6 $\mu$m, preferably in the range from 3 to 5.5 $\mu$m and
    iii. a size distribution span $(d_{90}-d_{10}/d_{50})$ in the range from 1 - 4.

Embodiment 3 Cathode material for a lithium ion battery, comprising

a) an active material,
b) a binder and
c) at least one conductive carbon additive comprising a non-graphitic carbon material,
wherein the non-graphitic carbon material has at least two of the following properties:

i. a modal pore size in the range from 1000 - 1500 nm,
ii. an average particle diameter $d_{50}$ in the range from 2 to 6 $\mu$m, preferably in the range from 3 to 5.5 $\mu$m and
iii. a size distribution span ($d_{90}$-$d_{10}$/$d_{50}$) in the range from 1 - 4.

Embodiment 4 Cathode material according to any one of the embodiments 1 -3 wherein the non-graphitic carbon material has a pore volume in the range from 0.4 - 1.00 cm$^3$/g.

Embodiment 5 Cathode material according to any one of embodiments 1 - 4, wherein the non-graphitic carbon material has a tap density in the range from 200 to 1000 kg/m$^3$, preferably in the range from 500 - 800 kg/m$^3$.

Embodiment 6 Cathode material according to any one of embodiments 1 - 5, wherein the non-graphitic carbon material has a skeletal density of 1.8 - 2.1 g/cm$^3$.

Embodiment 7 Cathode material according to any one of embodiments 1 - 6, wherein the conductive carbon additive further comprises carbon black, carbon nano tubes (CNT) or combination thereof.

Embodiment 8 Cathode material according to any one of embodiments 1 - 7, wherein the amount of conductive carbon additive is in the range from 1 - 5 wt.%.

Embodiment 9 Cathode material according to any one of embodiments 1 - 8, wherein the ratio of non-graphitic carbon to carbon black is in the range from 0.2 to 4, preferably in the range from 0.3 to 3.

Embodiment 10 Cathode material according to any one of embodiments 1 - 9, wherein the ratio of non-graphitic carbon to CNTs is in the range from 0.2 to 10.

Embodiment 11 Cathode material according to any one of embodiments 1 - 10, wherein the amount of non-graphitic carbon material in the cathode material is in the range from 0.5 to 2 wt.%.

Embodiment 12 Cathode material according to any one of embodiments 1 - 11 wherein the carbon black is present in an amount in the range from 0.1 to 1.5 wt.%, preferably in the range from 0.5 - to 1.5 wt.%.

Embodiment 13 Process for producing a cathode material for a lithium ion battery comprising the steps:

a) Pyrolyzing and carbonizing a precursor material comprising a component A, selected from the group consisting of resorcinol type resol type resins, novolac type resins, cellulose, tannic acid lignin and polyaniline to produce a non-graphitic carbon material
b) Comminuting the non-graphitic carbon material from step a. to obtain particles having the following properties:

i. an average particle diameter $d_{50}$ in the range from 2 to 6 $\mu$m, preferably from 3 to 5.5 $\mu$m,
ii. a size distribution span ($d_{90}$-$d_{10}$/$d_{50}$) in the range from 1 - 4.

c) Mixing the non-graphitic carbon material with an active material, a binder and carbon black.

Embodiment 14 Process according to embodiments 14, wherein the non-graphitic carbon material is mixed with carbon black in a ratio from 0.3 to 3.

Embodiment 15 A battery having a cathode material comprising a non-graphitic carbon material wherein the non-graphitic carbon material according to embodiments 1 - 12 is used.

Embodiment 16 Use of a non-graphitic x-ray amorphous carbon material as an additive in the cathode of a lithium ion battery.

**BRIEF DESCRIPTION OF THE DRAWINGS**

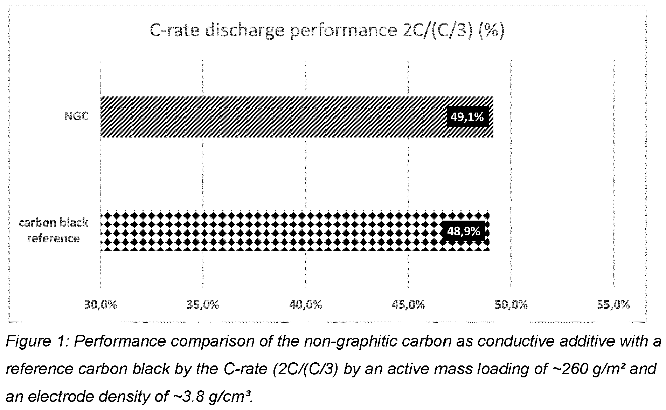

Figure 1    shows the results from C-rate measurements from a standard cathode material comprising carbon black in comparison to a cathode material comprising non-graphitic carbon as a conductive carbon additive.

**DETAILED DESCRIPTION**

The features disclosed in the claims, the specification, and the drawings maybe essential for different embodiments of the claimed invention, both separately and in any combination with each other.

In a first aspect the invention relates to a cathode material for a lithium ion battery. The cathode of a lithium ion battery corresponds to the positive electrode during the discharge process. The cathode comprises a cathode material. In the context of the invention the cathode is the region of a lithium ion battery where cathode material itself is reduced while discharging the battery. The cathode material comprises at least an active material, a binder and at least one conductive carbon additive comprising a non-graphitic carbon material.

The active material may preferably be selected from the group consisting of Lithium nickel manganese cobalt oxides (NMC), Lithium cobalt dioxide (LCO), Lithium manages oxide (LMO), Lithium nickel cobalt aluminum oxide (NCA) and Lithium iron phosphate (LFP.

The binder is preferably selected from the group consisting of fluorine containing vinyl polymers, e.g. poly(vinylidene fluoride) (PVDF), acrylic polymers, e.g. poly(acrylic acid) (PAA) and methacrylic polymers.

In accordance with the invention the cathode material comprises at least one conductive carbon additive comprising a non-graphitic carbon material.

The conductive carbon additive may preferably increase the conductivity of the cathode material. The conductive carbon additive itself, preferably has a conductivity in the range from 0.2 to 5 S/cm, preferably in the range of 0.4 to 2 S/cm measured at 0.9 kN/cm$^2$. Conductivity is measured by four-point-probe measurements.

In the context of the invention the term "non-graphitic carbon material" may be used to designate materials which have no distinct peak in an x-ray diffraction measurement.

Therefore, non-graphitic carbon material is sometimes termed as x-ray amorphous. This may not exclude the presence of nanocrystalline domains within the non-graphitic carbon material. Such nanocrystalline domains can be invisible in x-ray diffraction measurements, in particular in x-ray powder diffraction measurements (XRD). In a preferred example the non-graphitic carbon material is a hard carbon material.

In an embodiment of the invention the non-graphitic carbon material is obtainable by pyrolyzing and carbonizing a precursor material. Pyrolyzing in the context of the invention may be understood as thermal decomposition of carbon containing substances which essentially does not involve oxidation. Pyrolysis preferably is carried out at a temperature in the range from 300 to 450°C.

Carbonization in the context of the invention may be understood as thermal decomposition in the presence of a sub-stoichiometric amount of oxygen. It is preferred that the carbonized material essentially contains elemental carbon. Carbonization preferably is carried out at a temperature in the range above 450°C to 3000°C.

The precursor material comprises a component A selected from the group consisting of resol type resins, novolac type resins, cellulose, tannic acid, lignin and polyaniline, preferably novolac type resins. Novolac type resins in the context of this invention may be understood to be phenol-formaldehyde resins with a formaldehyde to phenol molar ratio of less than one. Preferably component A has a molecular weight of 2000 g/mol or more, in particular of 3000 g/mol or more. In an embodiment of the invention the precursor material essentially consists of component A. Consisting essentially may indicate that the precursor material does not include intentionally added substances.

In some embodiments component A may include impurities in an amount of 3 wt.% or less, preferably of 2 wt.% or less. In the case of novolac resins the impurities may be phenol. In a preferred embodiment of the invention the amount of component A in the precursor material is in the range from 20 to 100 wt.%, more preferably in the range from 30 to 99.5%.

In some embodiments the precursor material may comprise a solvent. The solvent may be polar or non-polar. In case of a polar solvent the precursor material may comprise water or consist of water. The amount of solvent, in particular the amount of water in the precursor material may be in the range from 0.5 - 60 wt.%. In another embodiment the precursor material does not contain any solvent, in particular no intentionally added solvent, like e.g. water. Preferably the precursor material does not comprise water because it has to be removed during the heating process which consumes additional energy.

Typical impurities, in particular metallic impurities, may contain, sodium, alumina, iron, potassium. Preferably the impurities are present in the range of <10 ppm by weight. Zinc can be included with even higher values of <100 ppm, but it leaves the final product during pyrolysis. In a preferred embodiment the component A may be selected from resol type resins or novolac type resins because it has high carbon yield and is commercially available in large quantities with high purities.

Lignin and cellulose may be advantageous because they are widely available materials. The product of the pyrolysis of component A is sometimes termed hard carbon or non-graphitizable carbon.

Another aspect of the invention relates to a cathode material for a lithium ion battery, comprising an active material, a binder, conductive carbon additive comprising a non-graphitic carbon material, wherein the non-graphitic carbon material has at least two of the following properties:

   i. a modal pore size in the range from 1000 - 1500 nm
   ii. an average particle diameter $d_{50}$ in the range from 2 to 6 $\mu$m, preferably in the range from 3 to 5,5 $\mu$m.
   iii. a size distribution span ($d_{90}$-$d_{10}$/$d_{50}$) in the range from 1 - 4.

The non-graphitic carbon material may e.g. exhibit properties i. and ii. or i. and iii. or ii. and iii.

The active material and the binder may be selected from the components described in this application.

In a preferred embodiment the modal pore size of the non-graphitic carbon material is in the range from 800 nm to 1200 nm. The porosity expressed by the above modal pore size is preferably related to inter particle porosity of the powder material. The non-graphitic carbon material of the invention preferably has no internal porosity. No internal porosity preferably means a non-graphitic carbon material having no pores with a pore size of 2 nm or more. The modal pore size may be determined by mercury porosimetry as described in the section "methods" herein. The average particle diameter may be determined by laser diffraction as described herein.

In a preferred embodiment the non-graphitic carbon material contained in the cathode material has a pore volume in the range from 0.4 - 1.00 cm³/g. A non-graphitic carbon material having a pore volume in that range can be favorably mixed with active material.

In another preferred embodiment the non-graphitic carbon material has a tap density in the range from 200 to 1000 kg/m³, preferably in the range from 500 - 800 kg/m³.

In another preferred embodiment the non-graphitic carbon material has a skeletal density in the range from 1.8 - 2.1 g/cm³. Non-graphitic carbon material in that range may have a suitable conductivity for lithium ion batteries.

In an optional embodiment of the invention the conductive carbon additive further comprises carbon black, carbon nano tubes (CNT) or combinations thereof.

Carbon black may be understood as specifically produced soot from controlled combustion of oil or gas. Commercial carbon black may be obtained under CAS No.: 1333-86-4.

The amount of conductive carbon additive in the cathode material is preferably in the range from 1 - 5 wt.% or even more preferred in the range from 2 - 4 wt.%.

In the conductive carbon additive, the ratio of non-graphitic carbon to carbon black in some embodiments may be in the range from 0.2 to 4, preferably in the range from 0.3 to 3.

In cases where the cathode material comprises non-graphitic carbon material and CNTs the ratio of non-graphitic carbon to CNTs is preferably in the range from 0.2 to 10.

In another preferred embodiment the amount of non-graphitic carbon material in the cathode material is in the range from 0.5 to 2 wt.%. If the value is above that value, the overall sheet conductivity is reduced which can lead to permeability issues, which can lead to a reduced c-rate performance.

In embodiments where carbon black is present in the cathode material the carbon black is preferably present in an amount in the range from 0.1 to 1.5 wt.%, preferably in the range from 0.5 - to 1.5 wt.%, relative to the overall weight of the cathode material.

In a third aspect the invention relates to a process for producing a cathode material for a lithium ion battery comprising the steps:

   a) pyrolyzing and carbonizing a precursor material comprising a component selected from the group consisting of resorcinol type resins, resol type resins, novolac type resins, cellulose, tannic acid lignin and polyaniline to produce a non-graphitic carbon material,
   b) comminuting the non-graphitic carbon material from step a) to obtain particles having the following properties:

   • an average particle diameter $d_{50}$ in the range from 2 to 6 $\mu$m, preferably from 3 to 5.5 $\mu$m,
   • a size distribution span ($d_{90}$-$d_{10}$/$d_{50}$) in the range from 1 - 4 and

   c) mixing the comminuted non-graphitic carbon material with an active material, a binder and carbon black to obtain a cathode material.

The process may contain more steps before, in between or after the listed steps a)-c) but the sequence of steps a) to c) remains unchanged.

Pyrolysis in step a) is preferably performed under inert gas conditions, e.g. in a nitrogen or argon atmosphere. Alternatively, the pyrolysis may be carried out in the presence of oxygen, like for example at most 1 Vol.-%, at most 5 Vol.-%, at most 10 Vol% or ambient air conditions. Pyrolysis preferably is carried out at a temperature in the range from 300 to 450°C. This process step is preferably carried until most pyrolysis gases, i.e. >90 Vol.-%, leave the precursor material.

Carbonization is preferably carried out in an inert gas atmosphere or vacuum. The temperature for carbonization preferably is in the range above 450°C to 3000°C. The hold time may preferably range from 10 min to 3 h.

In step b) of the process the material obtained from step a) is comminuted. Preferably comminuting is done by milling or crushing. Milling may be done for example with a ball mill, a rotary mill, a jet mill, vibration mill, swing mill or combinations thereof.

The preparation of the cathode material in step c) is preferably carried out by mixing active material, binder and conductive carbon additive. In a preferred embodiment of the invention the mixing takes place in one or more steps. Optionally the sequence of mixing steps is not further specified. Preferably the binder is first dissolved in an organic solvent. The solvent preferably is N-Methyl-2-pyrrolidon (NMP). Then the conductive additives are subsequently added and mixed. Afterwards the active material is added to this mixture. Optionally the sequence of mixing steps may be changed, e.g. according to processing requirements.

In a preferred embodiment the non-graphitic carbon material is mixed in step c) with carbon black in a ratio from 0.3 to 3.

In a third aspect the invention relates to a lithium ion battery having a cathode material comprising a non-graphitic carbon material wherein the non-graphitic carbon material according to the invention is used.

A lithium ion battery at least contains an anode, a cathode and a separator. The cathode may comprise a material described herein. The anode material comprised in the anode is not further limited. It may comprise any material the skilled person would consider to be suitable for the preparation of a lithium ion battery. Preferably the anode comprises a material selected from the group consisting of graphite (e.g. SMG from Hitachi), hard carbon, silicon, silicon oxide ($SiO_x$), silicon oxycarbide ($SiC_xO_y$), Lithium titanate (LTO), or/and tin-cobalt alloy.

In the context of the invention the separator may be selected by a person skilled in the art of battery production. The separator may be for example a glass fiber separator.

An anode and a cathode containing a cathode material according to the invention are combined with a separator and filled with an electrolyte. Typical electrolytes include lithium salts, such as $LiPF_6$, $LiBF_4$ or $LiClO_4$ in an organic solvent. The organic solvent may comprise a compound selected from ethylene carbonate, dimethyl carbonate and diethyl carbonate.

The specific steps for preparing a lithium ion battery from the cathode material of the invention are known in the art and may be done by a skilled person without inventive action. The pairing of anodes with suitable cathodes depends on the capacity of the electrodes whereby the capacity of the anode is preferably 5-15 % higher than the capacity of the cathode.

In a fourth aspect the invention relates to the use of a non-graphitic x-ray amorphous carbon material as an additive in the cathode of a lithium ion battery.

**Methods**

The following test methods are used in the invention. In absence of a test method, the ISO test method for the feature to be measured published most recently before the earliest filing date of the present application applies. In absence of distinct measuring conditions, standard ambient temperature and pressure (SATP) as a temperature of 298.15 K (25°C, 77°F) and an absolute pressure of 100 kPa (14.504 psi, 0.986 atm) apply.

Particle size distribution

Laser diffraction ($D_{10}$, $D_{50}$, $D_{90}$):
For particle size determination of the particles a laser diffraction method was used according to ISO Standard 25 13320. A Mastersizer 3000 from Malvern equipped with a He-Ne Laser (wave length of 632.8 nm with a maximum power of 4 mW) and a blue LED (wave length of 470 nm with a maximum power of 10 mW) and wet dispersing unit (Hydro MV) was employed for the measurements performed at ambient temperature of 30-33°C. Deionized water (130 mL) with one drop of a detergent (Igepal CA-630) as dispersion aid was used as measurement medium. The mixture was degassed in the dispersing unit by using the built-in stirrer at 3500 rpm for 30 s and then turned off for 10 seconds. This procedure is repeated two times the ultrasonication is turned on at maximum power. After 30 s the device initialization is turned on and the background measurement starts. The solid sample is added to the dispersing until the obscuration value is between 3-7%. The measurement starts 140 s afterwards. The values of $D_{10}$, $D_{50}$ and $D_{90}$ (volume based) were deter-

mined using the Malvern software Mastersizer 3000 Software 3.72. The Fraunhofer theory is used for samples where the particles are >10 $\mu$m and the Mie theory is applied to materials where the particles are < 10 $\mu$m.

Sieving (weight fraction having particle size of more than 315 um):

Sieving for weight fractions with particles having a size larger than 315 $\mu$m were performed carefully with a sieve with an Air Jet RHEWUM LPS 200 MC sieving machine (RHEWUM GmbH) equipped with a sieve with 315 $\mu$m openings from Haver und Böcker (HAVER & BOECKER OHG).

Mercury porosimetry (pore size and pore volume)

The specific pore volume for different pore sizes, the cumulative pore volume, and the porosity were measured by mercury porosimetry. The mercury porosimetry analysis was performed according to ISO15901-1 (2005). A Porotec Thermo Fisher Scientific PASCAL 140 (low pressure up to 4bar) und a PASCAL 440 (high pressure up to 4000bar) and SOLID EVO Version 1.4.0 software (all from Porotec Thermo Fisher Scientific, Inc.) were calibrated with porous glass spheres with a modal pore diameter of 140.2 nm and pore volume of 924.4 mm$^3$/g (ERM-FD122 Reference material from BAM). During measurements the pressure was increased or decreased continuously and controlled automatically by the instrument running in the PASCAL mode and speed set to 3 for intrusion and 7 for extrusion. The evaluation of Hg was corrected for the actual temperature. Value for surface tension was 0.48 N/m and contact angle 140°. Before starting a measurement, samples were heated to 150°C in vacuum for at least 8 hours.

Skeletal density (also referred to as material density or backbone density)

The skeletal density measurements were performed according to DIN 66137-2 (2019-03). The sample is dried at 150° for at least 8 hours. About 13-18 mL of the sample is given into the "Small vessel" for analyzation. The mass after drying was used for the calculation. A pycnomatic ATC Helium Pycnometer from Porotec Themo Fisher Scientific, Inc. was used for the measurement, employing the "small" sample volume and the "small" reference volume. The pycnometer was calibrated monthly using the "extra small" sphere with a well-known volume of around 14 cm$^3$. Measurements were performed using helium with a purity of 99,999%, at a temperature of 20°C and a gas pressure of approx. 2 bar, according to the DIN standard and the SOP of the device.

Conductivity measurement

The electrical powder conductivity was measured with a hydraulic press and multimeter in a four-point set up. Therefore, the sample was filled in a cylindrical custom-built conductivity probe setup with a diameter of 1.23 cm which was coated with Au. The initial filling height was in the range of 0.2-0.7 cm. The current of the four-point set up was set to 0.1 A and the measurement was conducted in constant current mode. The voltage was measured with an additional multimeter to calculate the powder conductivity is calculated with the following equation:

$$\rho = \frac{U * A}{I * h}$$

With p: powder conductivity; U: measured voltage; A: area of sample; I: applied current; h: height of the sample at defined pressure.
The force of the hydraulic press was increased up to 0.9 kN to ensure that the compression is comparable.

**Examples**

Example 1 (production of hard carbon)

The sample was produced by the pyrolysis of a commercial novolac (Alnovol PN 320 from Alnex). Thereby, 1 kg of resin was filled in a crucible and heated up to 600°C with a heating rate of 1°C/min in nitrogen atmosphere. The hold time at 600°C was 3 h and the yield after this treatment was roughly 50 wt.%. The resulting monolith was afterwards crushed with a jaw crusher. The resulting sample was then heated up to 1250°C to complete carbonization which improves the conductivity and reduces the specific surface area (BET). The yield of this process was in the range from 42-46 wt.%.
The sample was afterwards milled in a jet mill (100-AFG from Hosokawa) to the desired particle size specified herein.

## Example 2 (cathode and battery preparation)

The lithium ion battery cathodes were prepared with 95 wt.% of active material (NMC622), 2.5 wt.% binder (PVDF), 0.8 wt.% carbon black (C65 obtained from Imerys) and 1.7 wt.% non-graphitic carbon according to example 1. The reference cathode contained 2.5 wt.% carbon black (C65 obtained from Imerys) and no non-graphitic carbon according to the invention while the rest of the components in the reference remained unchanged.

The anode which was used as counter electrode for the battery tests contained 97 wt.% graphite (SPGPT from Targray) and 1.2 wt.% carboxymethyl cellulose (CMC) (MAC800 from Nippon) and 1.8 wt.% styrene-butadiene copolymer rubber (SBR) (104A from JSR).

Electrodes were prepared from the cathode material according to the invention. The density was in the range of about 3.8 g/m$^3$ and the loading was in the range of about 260 g/m$^2$ for both cathode materials.

A glass fiber separator (GF/A from Whatman) was used to in the cells in between anode and cathode.

A coin cell (CR2032) was used for the tests and the anode had a higher initial capacity with a factor of 1.05-1.15 compared to the cathode. The standard electrolyte LP30vc (1 M LiPF$_6$ in ethylene carbonate (EC) / dimethyl carbonate (DMC) 1:1 with 2 wt.% vinyl carbonate (VC)) was used for the experiments.

## Example 3 (battery testing)

A C-rate test was carried out with the non-graphitic carbon containing cathode and a C65 reference cathode. The C-rate is commonly used to describe how fast a battery is charged or discharged. A C-rate of 2C describes that the battery is charged or discharge in half an hour. The cells were stored overnight at 45°C before testing. The formation was carried out with 2x C/25, 2x C/10 and 2x C/5 in the potential window from 2.7 - 4.2 V. The C-rate discharge test was carried out with a C-charge value of C/5. Thereby the C-discharge value was varied from C/3 to 4C. The value of 2C/(C/3) in percentage was chosen to compare the performance of the batteries comprising the different cathodes.

The direct comparison in Figure 1 shows that both materials behaved similar and had a high C-Rate (2C/(C/3)). This means that the common carbon black can partly be replaced with a non-graphitic carbon powder without losing any performance. Table 1 summarizes the active mass loading and the electrode density together with the specific capacities of the battery cells normalized to the mass of the active cathode material.

*Table 1 Summary of battery cell parameters and the specific capacity at C/3 and 2C discharge.*

| | AM loading (g/m$^2$) | electrode density (g/cm$^3$) | specific capacity at C/3 (mAh/g) | specific capacity at 2C (mAh/g) | 2C/(C/3) |
|---|---|---|---|---|---|
| non-graphitic carbon | 260 | 3.80 | 160 | 79 | 49.1% |
| Carbon black reference | 255 | 3.82 | 164 | 80 | 48.9% |

## Claims

1. Cathode material for a lithium ion battery comprising

   a. an active material,
   b. a binder and
   c. at least one conductive carbon additive comprising a non-graphitic carbon material,

   wherein the non-graphitic carbon material is obtainable by pyrolyzing and carbonizing a precursor material comprising a component A selected from the group consisting of resol type resins, novolac type resins, cellulose, tannic acid, lignin and polyaniline.

2. Cathode material according to claim 1, wherein the non-graphitic carbon material has at least two of the following properties:

   i. a modal pore size in the range from 1000 - 1500 nm

ii. an average particle diameter $d_{50}$ in the range from 2 to 6 $\mu$m, preferably in the range from 3 to 5.5 $\mu$m and

iii. a size distribution span $(d_{90}-d_{10}/d_{50})$ in the range from 1 - 4.

3. Cathode material for a lithium ion battery, comprising

    a. an active material,
    b. a binder and
    c. a conductive carbon additive comprising a non-graphitic carbon material,

wherein the non-graphitic carbon material has at least two of the following properties:

    • a modal pore size in the range from 1000 - 1500 nm
    • an average particle diameter $d_{50}$ in the range from 2 to 6 $\mu$m, preferably in the range from 3 to 5,5 $\mu$m.
    • a size distribution span $(d_{90}-d_{10}/d_{50})$ in the range from 1 - 4.

4. Cathode material according to any one of claims 1 -3 wherein the non-graphitic carbon material has a pore volume in the range from 0.4 - 1.00 cm$^3$/g.

5. Cathode material according to any one of claims 1 - 4, wherein the non-graphitic carbon material has a tap density in the range from 200 to 1000 kg/m$^3$, preferably in the range from 500 - 800 kg/m$^3$.

6. Cathode material according to any one of claims 1 - 5, wherein the non-graphitic carbon material has a skeletal density of 1.8 - 2.1 g/cm$^3$.

7. Cathode material according to any one of claims 1 - 6, wherein the conductive carbon additive further comprises carbon black, carbon nano tubes (CNT) or combination thereof.

8. Cathode material according to any one of claims 1 - 7, wherein the amount of conductive carbon additive is in the range from 1 - 5 wt.%.

9. Cathode material according to any one of claims 1 - 8, wherein the ratio of non-graphitic carbon to carbon black is in the range from 0.2 to 4, preferably in the range from 0.3 to 3.

10. Cathode material according to any one of claims 1 - 9, wherein the ratio of non-graphitic carbon to CNTs is in the range from 0.2 to 10.

11. Cathode material according to any one of claims 1 - 10, wherein the amount of non-graphitic carbon material in the cathode material is in the range from 0.5 to 2 wt.%.

12. Cathode material according to any one of claims 7 - 9 wherein the carbon black is present in an amount in the range from 0.1 to 1.5 wt.%, preferably in the range from 0.5 - to 1.5 wt.%.

13. Process for producing a cathode material for a lithium ion battery comprising the steps:

    a. Pyrolyzing and carbonizing a precursor material comprising a component A, selected from the group consisting of resorcinol type resins, resol type resins, novolac type resins, cellulose, tannic acid lignin and polyaniline to produce a non-graphitic carbon material
    b. Comminuting the non-graphitic carbon material from step a. to obtain particles having the following properties:

        i. an average particle diameter $d_{50}$ in the range from 2 to 6 $\mu$m, preferably from 3 to 5.5 $\mu$m,
        ii.a size distribution span $(d_{90}-d_{10}/d_{50})$ in the range from 1 - 4.

    c. Mixing the non-graphitic carbon material with an active material, a binder and carbon black.

14. Process according to claim 13, wherein the non-graphitic carbon material is mixed with carbon black in a ratio from 0.3 to 3.

15. A battery having a cathode material comprising a non-graphitic carbon material wherein the non-graphitic carbon material according to Claims 1- 12 is used.

16. Use of a non-graphitic x-ray amorphous carbon material as an additive in the cathode of a lithium ion battery.

*Figure 1: Performance comparison of the non-graphitic carbon as conductive additive with a reference carbon black by the C-rate (2C/(C/3) by an active mass loading of ~260 g/m² and an electrode density of ~3.8 g/cm³.*

Europäisches
Patentamt

European
Patent Office

Office européen
des brevets

# EUROPEAN SEARCH REPORT

Application Number

EP 20 21 4849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2011 129442 A (HITACHI LTD) 30 June 2011 (2011-06-30) | 1-9, 11-16 | INV. H01M4/131 |
| Y | * page 4, paragraph 0021 - page 16, paragraph 0159; figures 1, 2; tables 1-4 * | 4-6 | H01M4/62 H01M4/1391 H01G11/44 |
| X | US 2017/179473 A1 (KAWAI TORU [JP]) 22 June 2017 (2017-06-22) | 1-16 | H01G11/38 |
| Y | * page 2, paragraph 0031 - page 9, paragraph 0125; tables 1-5 * | 4-6 | ADD. H01M4/505 H01M4/525 |
| X | US 2016/240853 A1 (SIMMONS TREVOR [US] ET AL) 18 August 2016 (2016-08-18) * page 2, paragraph 0043 - page 6, paragraph 0082; figures 1-8 * | 1-6,8, 12-14,16 | H01M10/0525 |
| X | EP 3 733 598 A1 (HERAEUS BATTERY TECH GMBH [DE]) 4 November 2020 (2020-11-04) * page 2, paragraph 0001 * * page 11, paragraph 0082 * * page 16, paragraph 0137 - page 21, paragraph 0199 * | 1-6,8, 12-14,16 | |
| Y | US 2013/252082 A1 (THOMPKINS LEAH A [US] ET AL) 26 September 2013 (2013-09-26) * page 1, paragraph 0007 * * page 9, paragraph 0169 - page 10, paragraph 0174 * * page 15, paragraph 0227 * | 4-6 | TECHNICAL FIELDS SEARCHED (IPC) H01G H01M |
| A | "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf * the whole document * | 1-16 | |

The present search report has been drawn up for all claims

| Place of search | Date of completion of the search | Examiner |
|---|---|---|
| Munich | 26 May 2021 | Polisski, Sergej |

EPO FORM 1503 03.82 (P04C01)

**ANNEX TO THE EUROPEAN SEARCH REPORT
ON EUROPEAN PATENT APPLICATION NO.**

EP 20 21 4849

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2021

| Patent document cited in search report | | Publication date | Patent family member(s) | | Publication date |
|---|---|---|---|---|---|
| JP 2011129442 | A | 30-06-2011 | JP | 5401296 B2 | 29-01-2014 |
| | | | JP | 2011129442 A | 30-06-2011 |
| US 2017179473 | A1 | 22-06-2017 | CN | 107078274 A | 18-08-2017 |
| | | | JP | 6222372 B2 | 01-11-2017 |
| | | | JP | WO2016047326 A1 | 27-04-2017 |
| | | | US | 2017179473 A1 | 22-06-2017 |
| | | | WO | 2016047326 A1 | 31-03-2016 |
| US 2016240853 | A1 | 18-08-2016 | CA | 2926796 A1 | 23-04-2015 |
| | | | EP | 3058612 A1 | 24-08-2016 |
| | | | US | 2016240853 A1 | 18-08-2016 |
| | | | WO | 2015057652 A1 | 23-04-2015 |
| EP 3733598 | A1 | 04-11-2020 | EP | 3733598 A1 | 04-11-2020 |
| | | | WO | 2020221742 A1 | 05-11-2020 |
| US 2013252082 | A1 | 26-09-2013 | US | 2013252082 A1 | 26-09-2013 |
| | | | WO | 2013106782 A2 | 18-07-2013 |

EPO FORM P0459

For more details about this annex : see Official Journal of the European Patent Office, No. 12/82